# EUROPEAN PATENT APPLICATION

(11) **EP 4 786 343 A1**
(43) Date of publication of application: **05.08.2026**
(21) Application number: 24881503.7
(22) Date of filing: 17.10.2024
(51) Int. Cl.: B64U 50/30

(54) **ELECTRIC AIRCRAFT, POWER DISTRIBUTION SYSTEM, POWER SUPPLY CONTROL METHOD AND COMPUTER STORAGE MEDIUM**

(30) Priority: 23.10.2023 CN 202311379125
(71) Applicant: Guangdong Huitian Aerospace Technology Co., Ltd., Guangzhou, Guangdong 511400 (CN)
(72) Inventor: ZHANG, Jun, Guangzhou, Guangdong 511400 (CN); LIU, Yintong, Guangzhou, Guangdong 511400 (CN); HOU, Cong, Guangzhou, Guangdong 511400 (CN); CAO, Gang, Guangzhou, Guangdong 511400 (CN); WEI, Jian, Guangzhou, Guangdong 511400 (CN)
(74) Representative: Osterhoff, Utz
(86) International application number: PCT/CN2024/125433
(87) International publication number: WO 2025/087138

(57) **Abstract**

Disclosed in the present application are an electric aircraft, a power distribution system, a power supply control method and a computer storage medium. The power distribution system for the electric aircraft includes: a first battery pack, a second battery pack, a first isolation device and a second isolation device; the first battery pack and the second battery pack supply power to first rotor motors via the first isolation device, and supply power to second rotor motors via the second isolation device; when a power supply failure occurs in the power distribution system, the first isolation device and the second isolation device isolate a faulty line and perform power reconfiguration. The embodiments of the present application have simple structures and low costs.

## Description

This application claims priority to Chinese Patent Application No. 2023113791255, filed with the China National Intellectual Property Administration on October 23, 2023, and entitled "ELECTRIC AIRCRAFT, POWER DISTRIBUTION SYSTEM, POWER SUPPLY CONTROL METHOD, AND COMPUTER STORAGE MEDIUM", the entire contents of which are incorporated herein by reference.

### TECHNICAL FIELD

The present application relates to the technical field of vehicles, and in particular, to an electric aircraft, a power distribution system, a power supply control method, and a computer storage medium.

### BACKGROUND

An electric aircraft refers to a machine that flies by driving an object through electric power, for example, an unmanned aerial vehicle, a flying car, and the like. Existing electric aircraft are of a multi-rotor structure, such as a four-rotor structure, a six-rotor structure, an eight-rotor structure, a twelve-rotor structure, and the like, that is, a plurality of arms are symmetrically arranged on a fuselage, and each arm is provided with a propeller. By adjusting rotation speeds and thrust distribution of the propellers, control over six degrees of freedom of motion of the whole aircraft, including pitch, roll, yaw, forward/backward flight, lateral flight, and lifting, is achieved.

During flight of the electric aircraft, when a single rotor fails, remaining rotors cannot effectively control a yaw degree of freedom of the whole aircraft, thereby causing an uncontrollable flight attitude of the aircraft and possibly leading to catastrophic accidents. Therefore, for an electric aircraft with high safety requirements, it is generally necessary to consider adding other means to ensure that six degrees of freedom of motion of the aircraft can still be controlled simultaneously after a single rotor fails. For example, two symmetrical arms are selected from arms of the aircraft, and two small ducted motors or thrust propellers are respectively installed on the two arms. After a single rotor fails, a yaw moment is directly applied to the aircraft through the small ducted motors or thrust propellers, which is an effective means to achieve simultaneous control over the six degrees of freedom of motion of the aircraft after the single rotor fails.

However, in the related art, a power supply structure for supplying power to various flight control components of the electric aircraft is very complex and has a high cost.

### SUMMARY

A main objective of the present application is to provide an electric aircraft, a power distribution system, a power supply control method, and a computer storage medium, so as to solve problems in the related art that a power distribution system of an electric aircraft has a complex structure and a high cost.

To achieve the above objective, the present application provides a power distribution system for an electric aircraft. The electric aircraft includes a fuselage, a plurality of rotors provided at the fuselage and rotor motors corresponding to drive the rotors, and the rotor motors are divided into two parts, the power distribution system includes: a first battery pack, a second battery pack, a first isolation device, and a second isolation device;
the first battery pack and the second battery pack are electrically connected to a first part of the rotor motors via the first isolation device to supply power to the first rotor motor;
the first battery pack and the second battery pack are electrically connected to a second part of the rotor motors via the second isolation device to supply power to the second rotor motor; and
when a power supply failure occurs in the power distribution system, the first isolation device and the second isolation device isolate a faulty line and reconstruct power supply lines.

In an embodiment, a first part of the rotor motors includes two sets of rotor motors, each set of rotor motors includes two symmetrically provided rotor motors; and the first isolation device includes: a bidirectional isolation component, a first intelligent protection component, and a second intelligent protection component;
one end of the first intelligent protection component is electrically connected to the first battery pack via a first bus, and another end of the first intelligent protection component is electrically connected to one set of rotor motors in the first part of the rotor motors;
one end of the second intelligent protection component is electrically connected to the second battery pack via a second bus, and another end of the second intelligent protection component is electrically connected to another set of rotor motors in the first part of the rotor motors;
and one end of the bidirectional isolation component is electrically connected to the first intelligent protection component, and another end of the bidirectional isolation component is electrically connected to the second intelligent protection component, and is configured to be disconnected when triggered by a short-circuit current.

In an embodiment, the second isolation device includes sets of unidirectional isolation components corresponding to the part of the second rotor motors, and each set of unidirectional isolation components includes two unidirectional isolation components;
one end of one unidirectional isolation component in the set of unidirectional isolation components is electrically connected to the first battery pack via a first bus, and one end of another unidirectional isolation component is electrically connected to the second battery pack via a second bus; and other ends of the two unidirectional isolation components in the set of unidirectional isolation components are electrically connected to a same rotor motor.

In an embodiment, a second part of the rotor motors includes two symmetrically provided rotor motors, a first ducted motor, and a second ducted motor; three sets of unidirectional isolation components are provided, and the first ducted motor and the second ducted motor are electrically connected to a same set of the unidirectional isolation components.

In an embodiment, a second part of the rotor motors includes at least two sets of rotor motors, each set of rotor motors includes two symmetrically provided rotor motors; at least four sets of unidirectional isolation components are provided, and the sets of unidirectional isolation components are correspondingly electrically connected to the second part of the rotor motors.

In an embodiment, the first intelligent protection component is provided with a first controller, and the second intelligent protection component is provided with a second controller; the first controller is configured to control whether the first intelligent protection component is disconnected according to a working state of the bidirectional isolation component and a working state of the second isolation device; and the second controller is configured to control whether the second intelligent protection component is disconnected according to the working state of the bidirectional isolation component and the working state of the second isolation device.

In an embodiment, the power distribution system further includes a control device configured to, when a power supply failure occurs in the power distribution system, control working states of the first isolation device and the second isolation device to isolate a faulty line and reconstruct a power supply line.

In an embodiment, the bidirectional isolation component includes a bidirectional switching unit; and/or the unidirectional isolation component includes a unidirectional switching unit; and/or both the first intelligent protection component and the second intelligent protection component include a fuse unit.

An embodiment of the present application further provides an electric aircraft, including a fuselage, a plurality of rotors provided at the fuselage, and rotor motors configured to drive the rotors, the rotor motors are divided into two parts; and the electric aircraft further includes a power distribution system configured to supply power to the rotor motors, and the power distribution system is the power distribution system according to any of the above embodiments.

An embodiment of the present application further provides a power supply control method for an electric aircraft, including: during power supply, in response to detecting a short-circuit current caused by a line fault in a power distribution system, controlling working states of a first isolation device and a second isolation device to isolate a faulty line from the power distribution system and reconstruct remaining power supply lines.

In an embodiment, the power distribution system is the power distribution system for the electric aircraft according to the above embodiment; and the controlling working states of the first isolation device and the second isolation device to isolate the faulty line from the power distribution system in response to detecting the short-circuit current caused by the line fault in the power distribution system includes:
in response to detecting a short-circuit current caused by a downstream fault in the power distribution system, controlling a bidirectional isolation component to be disconnected;
determining, according to a direction of the short-circuit current detected by the bidirectional isolation component and working states of unidirectional isolation components, whether to control a first intelligent protection component and a second intelligent protection component to be disconnected; and
controlling working states of the first intelligent protection component and the second intelligent protection component according to a determination result.

In an embodiment, the power distribution system is the power distribution system for the electric aircraft according to the above embodiment; and the controlling the working states of the first isolation device and the second isolation device to isolate the faulty line from the power distribution system in response to detecting the short-circuit current caused by the line fault in the power distribution system includes:
in response to detecting, by a bidirectional isolation component, a short-circuit current, disconnecting an electrical connection between a first intelligent protection component and a second intelligent protection component;
determining, by the bidirectional isolation component, a target intelligent protection component to be controlled according to a direction of the short-circuit current, and sending a control command to a controller corresponding to the target intelligent protection component;
determining, by the controller corresponding to the target intelligent protection component, whether to control the target intelligent protection component to be disconnected according to working states of all unidirectional isolation components; and
controlling, according to a determination result, the target intelligent protection component to be disconnected.

In an embodiment, the determining, by the bidirectional isolation component, the target intelligent protection component to be controlled according to the direction of the short-circuit current includes:
in response to the direction of the short-circuit current being from the first intelligent protection component to the second intelligent protection component, determining the second intelligent protection component as the target intelligent protection component; and
in response to the direction of the short-circuit current being from the second intelligent protection component to the first intelligent protection component, determining the first intelligent protection component as the target intelligent protection component.

In an embodiment, the determining, by the controller corresponding to the target intelligent protection component, whether to disconnect the target intelligent protection component according to the working states of all unidirectional isolation components includes:
in response to all unidirectional isolation components being in a connected state, determining that the target intelligent protection component is to be disconnected; and
in response to at least one unidirectional isolation component being in a disconnected state, determining that the target intelligent protection component is not to be disconnected.

In an embodiment, the controlling the working states of the first isolation device and the second isolation device to reconstruct the remaining power supply lines includes:
controlling the bidirectional isolation component to be connected.

The embodiments of the present application further provide a computer-readable storage medium, the computer-readable storage medium stores a power supply control program, and the power supply control program, when executed by a processor, implements steps of the power supply control method according to any one of the above embodiments.

The embodiments of the present application provide a power distribution system having a simple structure and low cost. A first isolation device is used to isolate a short-circuit fault of a part of loads and power sources thereof, and a second isolation device is used to isolate a short-circuit fault of another part of loads and power sources thereof. By combining the two methods, while satisfying system safety requirements (independence of power supply and distribution of power sources and loads), a number of battery packs and an amount of isolation components are reduced, thereby achieving lightweight of the whole aircraft and reducing system cost.

It should be understood that the foregoing general description and the following detailed description are merely exemplary and explanatory and are not intended to limit the present application.

### BRIEF DESCRIPTION OF THE DRAWINGS

By describing exemplary embodiments of the present application in more detail with reference to the accompanying drawings, the above and other objectives, features, and advantages of the present application will become more apparent, wherein in the exemplary embodiments of the present application, the same reference numerals generally denote the same components.
FIG. 1 is a schematic diagram of a power distribution system for an electric aircraft in the related art.
FIG. 2 is a schematic diagram of a power distribution system for an electric aircraft according to an embodiment of the present application.
FIG. 3 is a schematic structural diagram of a six-rotor electric aircraft according to an embodiment of the present application.
FIG. 4 is a schematic diagram of a power distribution system for the electric aircraft in FIG. 3 according to an embodiment of the present application.
FIG. 5 is a schematic structural diagram of an eight-rotor electric aircraft according to an embodiment of the present application.
FIG. 6 is a schematic diagram of a power distribution system for the electric aircraft in FIG. 5 according to an embodiment of the present application.
FIG. 7 is a schematic flowchart of a power supply control method for an electric aircraft according to an embodiment of the present application.
FIG. 8 is a schematic flowchart of another power supply control method for an electric aircraft according to an embodiment of the present application.

### DETAILED DESCRIPTION OF THE EMBODIMENTS

The embodiments of the present application will be described in more detail below with reference to the accompanying drawings. Although the embodiments of the present application are shown in the accompanying drawings, it should be understood that the present application may be implemented in various forms and should not be limited to the embodiments described herein. Rather, these embodiments are provided to make the present application more thorough and complete, and to fully convey the scope of the present application to those skilled in the art.

The terms used in the present application are only for the purpose of describing specific embodiments and are not intended to limit the present application. As used in the present application and the appended claims, singular forms "a", "the", and "said" are intended to include plural forms as well, unless the context clearly indicates otherwise. It should also be understood that the term "and/or" used herein refers to and includes any or all possible combinations of one or more of the associated listed items.

It should be understood that, although terms such as "first", "second", and "third" may be used in the present application to describe various information, such information should not be limited to these terms. These terms are only used to distinguish information of the same type from each other. For example, without departing from the scope of the present application, first information may also be referred to as second information, and similarly, second information may also be referred to as first information. Thus, a feature defined with "first" and "second" may explicitly or implicitly include one or more such features. In the description of the present application, "a plurality of" means two or more, unless otherwise specifically defined.

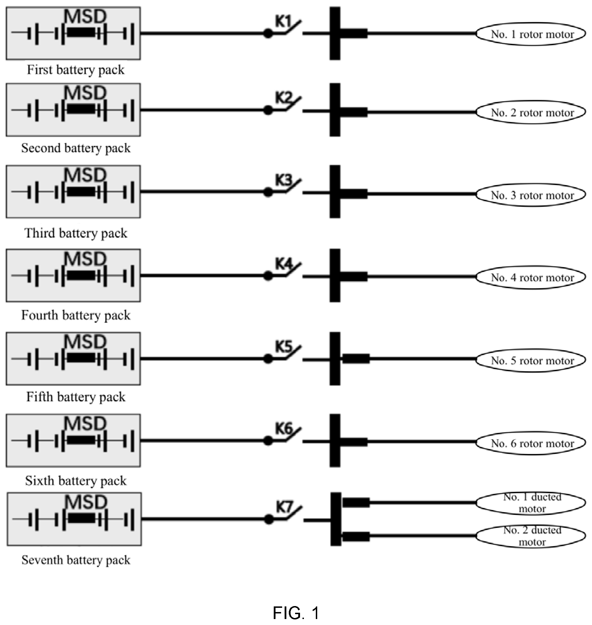

In order to ensure safety of an aircraft, a power supply structure of the aircraft needs to ensure that rotors for maintaining normal flight of the aircraft and two small ducted motors or thrust propellers for controlling yaw after failure of a single rotor do not fail simultaneously (or a probability of simultaneous failure is sufficiently low). For a power distribution system of the aircraft, when any load or power source connected in a power distribution network has a short-circuit fault, if the short-circuit fault is not isolated from the power distribution network in time, the entire power distribution network will be paralyzed. Referring to FIG. 1, FIG. 1 is a schematic diagram of a structure of a power distribution system of a six-rotor electric aircraft in the related art. In order to achieve the objective that rotors and small ducted motors or thrust propellers of the electric aircraft of the above configuration do not fail simultaneously, in the related art, the power distribution system is designed as a structure shown in FIG. 1, that is, each rotor and each small ducted motor or thrust propeller of the aircraft is respectively supplied with power by one battery pack, and seven battery packs are independent of each other to form seven independent power distribution networks. In this way, when a short-circuit fault occurs in each power distribution network, only a power source and a load in the power distribution network are affected, and other power sources and loads on the power distribution network can still operate normally, thereby avoiding a situation that the rotors and the small ducted motors or thrust propellers fail simultaneously (or reducing a probability of simultaneous failure to be sufficiently low).

However, the power supply scheme shown in FIG. 1 requires splitting battery packs of the electric aircraft into seven battery packs, and more housings, mounting structures, control components, and cooling structures are required under a same electric quantity, thereby significantly increasing weight and cost of a battery system, which is not conducive to lightweight design and cost control of the whole aircraft. Meanwhile, the battery packs are completely independent from each other and real-time balancing cannot be achieved, resulting in low utilization of battery capacity (available electric quantity is determined by a battery pack with the lowest electric quantity), and poor charging convenience (the seven battery packs cannot be charged simultaneously), thereby failing to ensure a good user experience.

In an embodiment, a power distribution system having a simple structure and low cost is provided. A bidirectional isolation component in combination with an intelligent protection component is used to isolate a short-circuit fault of a part of loads and power sources thereof, and a unidirectional isolation component is used to isolate a short-circuit fault of another part of loads and power sources thereof. By combining the two methods, while satisfying system safety requirements (independence of power supply and distribution of power sources and loads), a number of battery packs and an amount of isolation components are reduced, thereby achieving lightweight of the whole aircraft and reducing system cost.

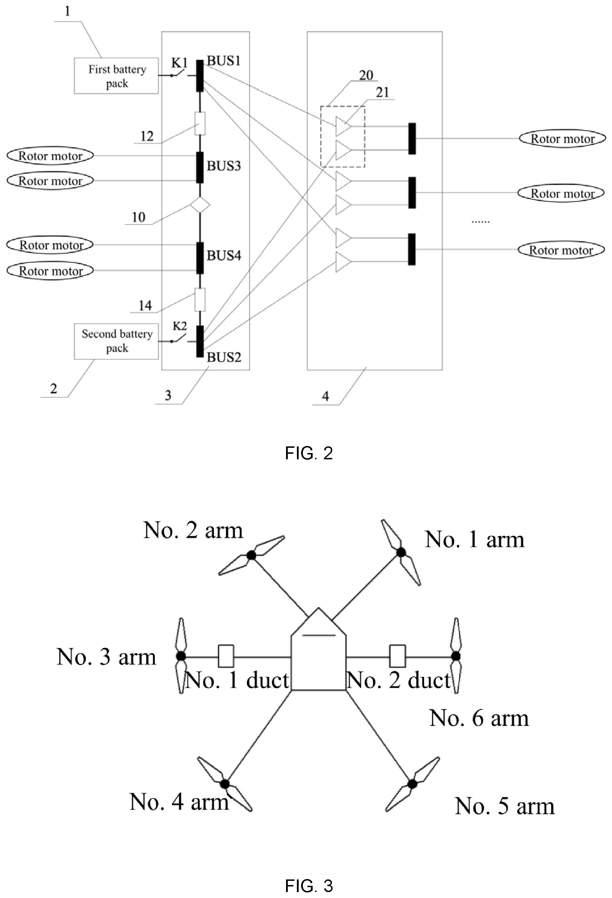

Referring to FIG. 2, FIG. 2 is a schematic structural block diagram of a power distribution system of an electric aircraft according to an embodiment of the present application. The electric aircraft includes a fuselage and a plurality of rotors provided at the fuselage, each rotor corresponds to a rotor motor, and the rotor motor is configured to drive the rotor to operate, for example, a rotation speed and a rotation direction of the rotor. The power distribution system of the electric aircraft is configured to supply power to the rotor motors of the electric aircraft, and includes: a first battery pack 1, a second battery pack 2, a first isolation device 3, and a second isolation device 4. In this embodiment, the rotor motors of the electric aircraft are divided into two parts, that is, a first part of the rotor motors and a second part of the rotor motors.

The first battery pack 1 and the second battery pack 2 are electrically connected to the first part of the rotor motors via the first isolation device 3 to supply power to the first part of the rotor motors. The first battery pack 1 and the second battery pack 2 are electrically connected to the second part of the rotor motors via the second isolation device 4 to supply power to the second part of the rotor motors.

The first isolation device 3 and the second isolation device 4 are configured to isolate a faulty line and reconstruct power supply lines when a power supply failure occurs in the power distribution system.

In this embodiment, the first isolation device and the second isolation device cooperate to perform isolation of a faulty line and reconstruction of remaining power supply lines, such that grid-connected output can be achieved by two battery packs in the power distribution system, and a short-circuit fault occurring in the power distribution system can be rapidly isolated without affecting normal operation of other power supply lines. Therefore, the power distribution system of the electric aircraft according to this embodiment achieves safety objectives of the aircraft, while achieving lightweight of the whole aircraft and reducing cost.

In an embodiment, the first isolation device 3 includes a bidirectional isolation component 10, a first intelligent protection component 12, and a second intelligent protection component 14. One end of the first intelligent protection component 12 is electrically connected to the first battery pack 1 via a first bus BUS1, and another end of the first intelligent protection component 12 is respectively electrically connected to one set of rotor motors in the first part of the rotor motors.

One end of the second intelligent protection component 14 is electrically connected to the second battery pack 2 via a second bus BUS2, and another end of the second intelligent protection component 14 is electrically connected to another set of rotor motors in the first part of the rotor motors.

One end of the bidirectional isolation component 10 is electrically connected to the first intelligent protection component 12, and another end of the bidirectional isolation component 10 is electrically connected to the second intelligent protection component 14, and the bidirectional isolation component is configured to be disconnected when triggered by a short-circuit current.

A current direction in the bidirectional isolation component 10 includes a direction from the first intelligent protection component 12 to the second intelligent protection component 14 and a direction from the second intelligent protection component 14 to the first intelligent protection component 12. The bidirectional isolation component is, for example, a bidirectional isolation switch, and the switch is in a connected state under a normal operating condition; when a short-circuit current flows through the switch, the switch is rapidly switched to a disconnected state. Meanwhile, the bidirectional isolation component is further configured to detect a direction of the current, for example, whether the current flows from the first intelligent protection component 12 to the second intelligent protection component 14 or from the second intelligent protection component 14 to the first intelligent protection component 12.

The first intelligent protection component 12 and the second intelligent protection component 14 include, for example, a fuse unit, and the fuse unit is configured to receive a control signal and actively fuse based on the control signal, and after fusing, the fuse unit cannot be restored to a connected state.

Further, the first intelligent protection component 12 is electrically connected to the bidirectional isolation component 10 and one set of rotor motors via a third bus BUS3. The second intelligent protection component 14 is electrically connected to the bidirectional isolation component 10 and another set of rotor motors via a fourth bus BUS4.

In the above embodiment, the bidirectional isolation component 10 is rapidly disconnected when a short-circuit current occurs, and meanwhile, according to a direction of the current, a control instruction is sent to a corresponding intelligent protection component, so that the intelligent protection component is actively fused, thereby isolating a faulty line.

In an embodiment, the second isolation device 4 includes sets of unidirectional isolation components 20 correspondingly provided for the second part of the rotor motors, and each set of unidirectional isolation components 20 includes two unidirectional isolation components 21.

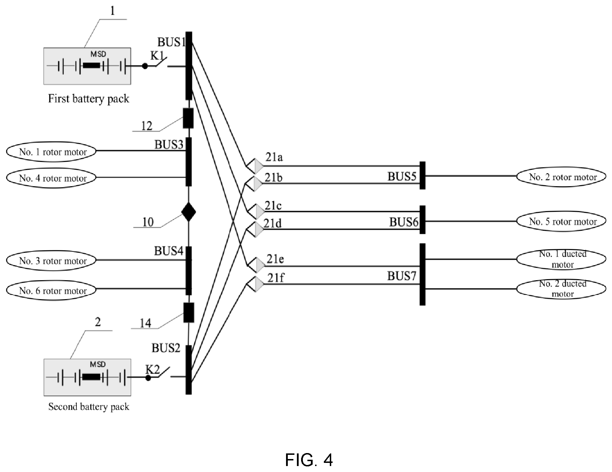

Referring to FIG. 4, one end of one unidirectional isolation component 21a in the set of unidirectional isolation components 20 is electrically connected to the first battery pack 1 via a first bus BUS1, and one end of another unidirectional isolation component 21b is electrically connected to the second battery pack 2 via a second bus BUS2; and other ends of the two unidirectional isolation components in the set of unidirectional isolation components 20 are electrically connected to a same rotor motor.

The unidirectional isolation component 21 includes, for example, a unidirectional isolation switch, and is configured to be disconnected when triggered by a short-circuit current. A structure of the unidirectional isolation component 21 is similar to a structure of the bidirectional isolation component 10, and a difference is that a current flowing through the unidirectional isolation component 21 is only in one direction.

In an embodiment, when a short-circuit current occurs, the bidirectional isolation component 10 in the first isolation device 3 detects the short-circuit current and is rapidly disconnected, and sends a control signal to a corresponding intelligent protection component according to a direction of the short-circuit current. For example, when the direction of the short-circuit current detected by the bidirectional isolation component 10 is from the first intelligent protection component 12 to the second intelligent protection component 14, the control signal is sent to the second intelligent protection component 14; and when the direction of the short-circuit current detected by the bidirectional isolation component 10 is from the second intelligent protection component 14 to the first intelligent protection component 12, the control signal is sent to the first intelligent protection component 12. The intelligent protection component receiving the control signal determines whether to control the intelligent protection component to be disconnected according to states of the unidirectional isolation components in the second isolation device 4.

Further, a first controller is correspondingly provided in the first intelligent protection component 12, and a second controller is correspondingly provided in the second intelligent protection component 14; the first controller is configured to control whether the first intelligent protection component 12 is disconnected according to a working state of the bidirectional isolation component 10 and a working state of the second isolation device 4; and the second controller is configured to control whether the second intelligent protection component 14 is disconnected according to the working state of the bidirectional isolation component 10 and the working state of the second isolation device 4.

For example, since a power supply failure at any line position in the power distribution system causes a short-circuit current, when the bidirectional isolation component 10 detects the short-circuit current, it is necessary to determine whether the short-circuit current is caused by a fault in a power supply line of the second part of the rotor motors or a fault in a power supply line of the first part of the rotor motors. Therefore, based on the working state of the bidirectional isolation component 10 and the working state of the second isolation device 4, it is determined whether to control the second intelligent protection component 14 to be disconnected. For example, when the bidirectional isolation component 10 is disconnected and any one of the unidirectional isolation components in the second isolation device 4 is disconnected, it is determined that the short-circuit current is caused by a fault in the power supply line of the second part of the rotor motors, and therefore the first intelligent protection component 12 and the second intelligent protection component 14 are not disconnected; and when the bidirectional isolation component 10 is disconnected and all of the unidirectional isolation components in the second isolation device 4 are in a connected state, it is determined that the short-circuit current is caused by a fault in the power supply line of the first part of the rotor motors, and therefore a corresponding intelligent protection component is controlled to be disconnected according to a direction of the short-circuit current.

In this embodiment, by providing the first intelligent protection component with the corresponding first controller and providing the second intelligent protection component with the corresponding second controller, the controllers can independently control disconnection of the intelligent protection components, thereby avoiding a situation that the intelligent protection components cannot be disconnected due to failure of a controller, which affects safety of the electric aircraft.

In an embodiment, the power distribution system further includes a control device, and the control device is configured to, when a power supply failure occurs in the power distribution system, control working states of the first isolation device and the second isolation device to isolate a faulty line and reconstruct power supply lines. It can be understood that the control device may be independently provided from the controllers in the foregoing embodiments, or the control device may replace the foregoing embodiments to implement functions of the controllers in the foregoing embodiments. For example, in response to detecting a short-circuit current caused by a downstream fault in the power distribution system, controlling the bidirectional isolation component 10 to be disconnected; determining, according to a direction of the short-circuit current detected by the bidirectional isolation component 10 and working states of the unidirectional isolation components 21, whether to control the first intelligent protection component 12 and the second intelligent protection component 14 to be disconnected; and controlling working states of the first intelligent protection component 12 and the second intelligent protection component 14 according to a determination result.

Further, after isolating a faulty power supply line, it is further necessary to control a working state of the first isolation device, that is, controlling the bidirectional isolation component to be connected, so that remaining power supply lines are restored to the power distribution network.

Referring to FIG. 3 and FIG. 4, FIG. 3 is a schematic structural diagram of a six-rotor electric aircraft according to an embodiment of the present application, and FIG. 4 is a schematic diagram of a power distribution system of the six-rotor electric aircraft according to an embodiment of the present application.

The six-rotor electric aircraft includes a fuselage and six arms, namely a No. 1 arm, a No. 2 arm, a No. 3 arm, a No. 4 arm, a No. 5 arm, and a No. 6 arm, and each arm is provided with a propeller. A duct structure is provided on the No. 3 arm and the No. 6 arm, namely a first duct (No. 1 duct) and a second duct (No. 2 duct). Each propeller corresponds to a driving motor, that is, the propeller on the No. 1 arm corresponds to a No. 1 rotor motor, the propeller on the No. 2 arm corresponds to a No. 2 rotor motor, the propeller on the No. 3 arm corresponds to a No. 3 rotor motor, the propeller on the No. 4 arm corresponds to a No. 4 rotor motor, the propeller on the No. 5 arm corresponds to a No. 5 rotor motor, and the propeller on the No. 6 arm corresponds to a No. 6 rotor motor; the first duct corresponds to a No. 1 ducted motor, and the second duct corresponds to a No. 2 ducted motor. In this embodiment, the first part of the rotor motors includes the No. 1 rotor motor, the No. 4 rotor motor, the No. 3 rotor motor, and the No. 6 rotor motor; and the second part of the rotor motors includes the No. 3 rotor motor, the No. 5 rotor motor, the No. 1 ducted motor, and the No. 2 ducted motor.

The power distribution system of the six-rotor electric aircraft includes two battery packs, one bidirectional isolation component, two intelligent protection components, six unidirectional isolation components, and a plurality of buses.

For example, the first battery pack 1 is connected to a first bus BUS1, and the second battery pack 2 is connected to a second bus BUS2. The No. 1 rotor motor and the No. 4 rotor motor are connected to a third bus BUS3, and the third bus BUS3 is connected to the first bus BUS1 via the first intelligent protection component 12 to receive power input from the first battery pack 1 and supply power to the No. 1 rotor motor and the No. 4 rotor motor. The No. 3 rotor motor and the No. 6 rotor motor are connected to a fourth bus BUS4, and the fourth bus BUS4 is connected to the second bus BUS2 via the second intelligent protection component 14 to receive power input from the second battery pack 2 and supply power to the No. 3 rotor motor and the No. 6 rotor motor.

The third bus BUS3 and the fourth bus BUS4 are connected via the bidirectional isolation component 10. The bidirectional isolation component 10 is in a normally connected state when the power distribution system is powered on, so as to achieve real-time balancing of electric quantity between the first battery pack 1 and the second battery pack 2. The bidirectional isolation component 10 is capable of sensing a current flowing through the bidirectional isolation component and a direction of the current. When a short-circuit current is sensed, the bidirectional isolation component is triggered to be switched to a disconnected state.

The first bus BUS1 and the second bus BUS2 respectively supply power independently to the No. 2 rotor motor, the No. 5 rotor motor, the No. 1 ducted motor, and the No. 2 ducted motor via six unidirectional isolation components 21a to 21f and a fifth bus BUS5, a sixth bus BUS6, and a seventh bus BUS7.

### (1) A short-circuit fault occurs in the first bus BUS1 or the first battery pack 1

When a short-circuit fault occurs in the first bus BUS1 or the first battery pack 1 connected to the first bus BUS1, the bidirectional isolation component senses the short-circuit current and is rapidly disconnected when triggered by the short-circuit current. At this time, a component in which the short-circuit fault occurs in the power distribution system can be isolated, that is, an influence of the short-circuit fault is limited within the first bus BUS1, the first battery pack 1 connected to the first bus BUS1, the third bus BUS3, and the No. 1 rotor motor and the No. 4 rotor motor connected to the third bus BUS3.

In order to ensure power output of the whole aircraft, the third bus BUS3 and the No. 1 rotor motor and the No. 4 rotor motor connected to the third bus BUS3 need to be connected back to the power distribution network. Therefore, while the bidirectional isolation component is disconnected when triggered by the short-circuit current, a direction of the short-circuit current (flowing from the fourth bus BUS4 to the third bus BUS3) is fed back to the controller, and the controller controls the first intelligent protection component 12 to be fused according to the direction of the short-circuit current and states of the unidirectional isolation components (the unidirectional isolation components 21a to 21f are all in a connected state), so that the influence of the short-circuit fault is limited within the first bus BUS1 and the first battery pack 1 connected to the first bus BUS1.

At this time, the third bus BUS3 and the No. 1 rotor motor and the No. 4 rotor motor connected to the third bus BUS3 are all in an open-circuit state, and the controller sends an instruction to the bidirectional isolation component, so that the bidirectional isolation component is connected, thereby connecting the third bus BUS3 and the No. 1 rotor motor and the No. 4 rotor motor connected to the third bus BUS3 back to the power distribution network to achieve power reconstruction. That is, when a short-circuit fault occurs in the first bus BUS1 or the first battery pack 1 connected to the first bus BUS1, the entire power distribution network only loses power supply of the first battery pack 1.

### (2) A short-circuit fault occurs in the second bus BUS2 or the second battery pack

Similarly, when a short-circuit fault occurs in the second bus BUS2 or the second battery pack 2 connected to the second bus BUS2, the bidirectional isolation component senses the short-circuit current and is rapidly disconnected when triggered by the short-circuit current. At this time, a component in which the short-circuit fault occurs in the power distribution system can be isolated, that is, an influence of the short-circuit fault is limited within the second bus BUS2, the second battery pack 2 connected to the second bus BUS2, the fourth bus BUS4, and the No. 3 rotor motor and the No. 6 rotor motor connected to the fourth bus BUS4.

In order to ensure power output of the whole aircraft, the fourth bus BUS4 and the No. 3 rotor motor and the No. 6 rotor motor connected to the fourth bus BUS4 need to be connected back to the power distribution network. Therefore, while the bidirectional isolation component is disconnected when triggered by the short-circuit current, a direction of the short-circuit current (flowing from the third bus BUS3 to the fourth bus BUS4) is fed back to the controller, and the controller controls the second intelligent protection component 14 to be fused according to the direction of the short-circuit current and states of the unidirectional isolation components (the unidirectional isolation components 21a to 21f are all in a connected state), so that the influence of the short-circuit fault is limited within the second bus BUS2 and the second battery pack 2 connected to the second bus BUS2.

At this time, the fourth bus BUS4 and the No. 3 rotor motor and the No. 6 rotor motor connected to the fourth bus BUS4 are all in an open-circuit state, and the controller sends an instruction to the bidirectional isolation component, so that the bidirectional isolation component is connected, thereby connecting the fourth bus BUS4 and the No. 3 rotor motor and the No. 6 rotor motor connected to the fourth bus BUS4 back to the power distribution network to achieve power reconstruction. That is, when a short-circuit fault occurs in the second bus BUS2 or the second battery pack 2 connected to the second bus BUS2, the entire power distribution network only loses power supply of the second battery pack 2.

### (3) A short-circuit fault occurs in the third bus or the No. 1 rotor motor or the No. 4 rotor motor

When a short-circuit fault occurs in the third bus BUS3 or the No. 1 rotor motor or the No. 4 rotor motor connected to the third bus BUS3, the bidirectional isolation component senses the short-circuit current and is rapidly disconnected when triggered by the short-circuit current. At this time, a component in which the short-circuit fault occurs in the power distribution system can be isolated, that is, an influence of the short-circuit fault is limited within the first bus BUS1, the first battery pack 1 connected to the first bus BUS1, the third bus BUS3, and the No. 1 rotor motor and the No. 4 rotor motor connected to the third bus BUS3.

In order to ensure power output of the whole aircraft, the first bus BUS1 and the first battery pack 1 connected to the first bus BUS1 need to be connected back to the power distribution network. Therefore, while the bidirectional isolation component is disconnected when triggered by the short-circuit current, a direction of the short-circuit current (flowing from the fourth bus BUS4 to the third bus BUS3) is fed back to the controller, and the controller controls the first intelligent protection component to be fused according to the direction of the short-circuit current and states of the unidirectional isolation components (the unidirectional isolation components 21a to 21f are all in a connected state), so that the influence of the short-circuit fault is limited within the third bus BUS3 and the No. 1 rotor motor and the No. 4 rotor motor connected to the third bus BUS3, and the first bus BUS1 and the first battery pack 1 connected to the first bus BUS1 are restored to supply power to the power distribution network.

Therefore, when a short-circuit fault occurs in the third bus BUS3 or the No. 1 rotor motor or the No. 4 rotor motor connected to the third bus BUS3, the entire power distribution network only loses output of the No. 1 rotor motor and the No. 4 rotor motor. Since the No. 1 rotor and the No. 4 rotor are symmetrically arranged on the aircraft, simultaneous loss of power thereof is acceptable.

### (4) A short-circuit fault occurs in the fourth bus BUS4 or the No. 3 rotor motor or the No. 6 rotor motor

Similarly, when a short-circuit fault occurs in the fourth bus BUS4 or the No. 3 rotor motor or the No. 6 rotor motor connected to the fourth bus BUS4, the bidirectional isolation component senses a short-circuit current and is rapidly disconnected when triggered by the short-circuit current. At this time, a component in which the short-circuit fault occurs in the power distribution system can be isolated, that is, an influence of the short-circuit fault is limited within the second bus BUS2, the second battery pack 2 connected to the second bus BUS2, the fourth bus BUS4, and the No. 3 rotor motor and the No. 6 rotor motor connected to the fourth bus BUS4.

In order to ensure power output of the whole aircraft, the second bus BUS2 and the second battery pack 2 connected to the second bus BUS2 need to be connected back to the power distribution network. Therefore, while the bidirectional isolation component is disconnected when triggered by the short-circuit current, a direction of the short-circuit current (flowing from the third bus BUS3 to the fourth bus BUS4) is fed back to the controller, and the controller controls the second intelligent protection component to be fused according to the direction of the short-circuit current and states of the unidirectional isolation components (the unidirectional isolation components 21a to 21f are all in a connected state), so that the influence of the short-circuit fault is limited within the fourth bus BUS4 and the No. 3 rotor motor and the No. 6 rotor motor connected to the fourth bus BUS4, and the second bus BUS2 and the second battery pack 2 connected to the second bus BUS2 are restored to supply power to the power distribution network.

Therefore, when a short-circuit fault occurs in the fourth bus BUS4 or the No. 3 rotor motor or the No. 6 rotor motor connected to the fourth bus BUS4, the entire power distribution network only loses output of the No. 3 rotor motor and the No. 6 rotor motor. Since the No. 3 rotor and the No. 6 rotor are symmetrically arranged on the aircraft, simultaneous loss of power thereof is acceptable.

### (5) At least one load among the No. 2 rotor motor, the No. 5 rotor motor, the No. 1 ducted motor, and the No. 2 ducted motor has a short-circuit fault

When any one or more loads among the No. 2 rotor motor, the No. 5 rotor motor, the No. 1 ducted motor, and the No. 2 ducted motor have a short-circuit fault, two unidirectional isolation components connected to a short-circuit load are rapidly disconnected when triggered by a short-circuit current, so as to isolate the short-circuit fault.

Meanwhile, at this time, the bidirectional isolation component may also sense a relatively large short-circuit current, be disconnected when triggered by the short-circuit current, and feed back a direction of the short-circuit current to the controller. Since the unidirectional isolation components connected to the short-circuit load among the unidirectional isolation components are in a disconnected state, the first intelligent protection component and the second intelligent protection component are not fused.

Therefore, when a short-circuit fault occurs in any one load among the No. 2 rotor motor and the No. 5 rotor motor, the entire power distribution network only loses output of a motor corresponding to the short-circuit fault itself. When a short-circuit fault occurs in any one load among the No. 1 ducted motor and the No. 2 ducted motor, the entire power distribution network only loses output of the No. 1 ducted motor and the No. 2 ducted motor, and output of six rotor motors is not affected, thereby not affecting safety of the whole aircraft.

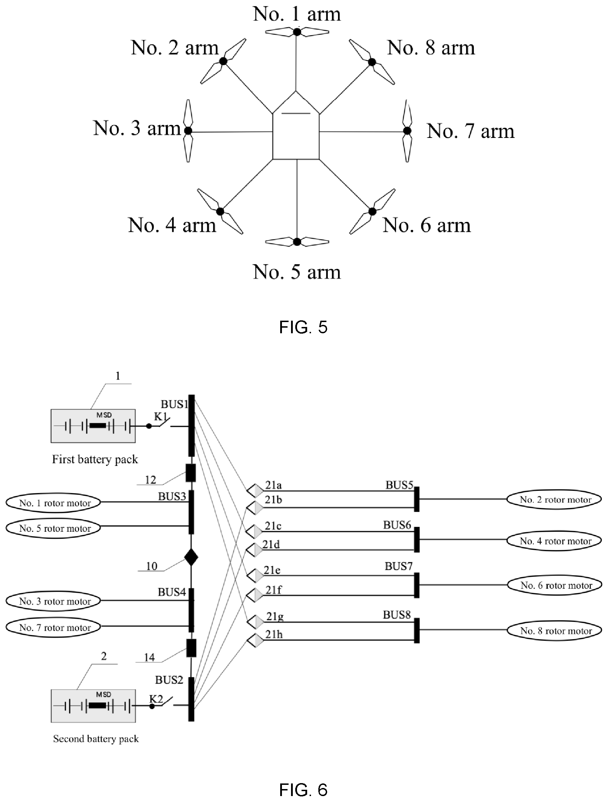

Referring to FIG. 5 and FIG. 6, FIG. 5 is a schematic structural diagram of an eight-rotor electric aircraft according to an embodiment of the present application, and FIG. 6 is a schematic diagram of a power distribution system of the eight-rotor electric aircraft according to an embodiment of the present application.

The eight-rotor electric aircraft includes a fuselage and eight arms, namely a No. 1 arm, a No. 2 arm, a No. 3 arm, a No. 4 arm, a No. 5 arm, a No. 6 arm, a No. 7 arm, and a No. 8 arm, and each arm is provided with a propeller. Each propeller corresponds to a driving motor, that is, the propeller on the No. 1 arm corresponds to a No. 1 rotor motor, the propeller on the No. 2 arm corresponds to a No. 2 rotor motor, the propeller on the No. 3 arm corresponds to a No. 3 rotor motor, the propeller on the No. 4 arm corresponds to a No. 4 rotor motor, the propeller on the No. 5 arm corresponds to a No. 5 rotor motor, the propeller on the No. 6 arm corresponds to a No. 6 rotor motor, the propeller on the No. 7 arm corresponds to a No. 7 rotor motor, and the propeller on the No. 8 arm corresponds to a No. 8 rotor motor. In this embodiment, the first part of the rotor motors includes the No. 1 rotor motor, the No. 5 rotor motor, the No. 3 rotor motor, and the No. 7 rotor motor; and the second part of the rotor motors includes the No. 2 rotor motor, the No. 4 rotor motor, the No. 6 rotor motor, and the No. 8 rotor motor.

The power distribution system of the eight-rotor electric aircraft includes two battery packs, one bidirectional isolation component, two intelligent protection components, eight unidirectional isolation components, and a plurality of buses.

For example, the first battery pack 1 is connected to the first bus BUS1, and the second battery pack 2 is connected to the second bus BUS2. The No. 1 rotor motor and the No. 5 rotor motor are connected to the third bus BUS3, and the third bus BUS3 is connected to the first bus BUS1 via the first intelligent protection component to receive power input from the first battery pack 1 and supply power to the No. 1 rotor motor and the No. 5 rotor motor. The No. 3 rotor motor and the No. 7 rotor motor are connected to the fourth bus BUS4, and the fourth bus BUS4 is connected to the second bus BUS2 via the second intelligent protection component to receive power input from the second battery pack 2 and supply power to the No. 3 rotor motor and the No. 7 rotor motor.

The third bus BUS3 and the fourth bus BUS4 are connected via the bidirectional isolation component. The bidirectional isolation component is in a normally connected state when the power distribution system is powered on, so as to achieve real-time balancing of electric quantity between the first battery pack 1 and the second battery pack 2. The bidirectional isolation component is capable of sensing a current flowing through the bidirectional isolation component and a direction of the current. When a short-circuit current is sensed, the bidirectional isolation component is triggered to be switched to a disconnected state.

The first bus BUS1 and the second bus BUS2 respectively supply power independently to the No. 2 rotor motor, the No. 4 rotor motor, the No. 6 rotor motor, and the No. 8 rotor motor via eight unidirectional isolation components 21a to 21h and a fifth bus BUS5, a sixth bus BUS6, a seventh bus BUS7, and an eighth bus BUS8.

### (1) A short-circuit fault occurs in the first bus BUS1 or the first battery pack 1

When a short-circuit fault occurs in the first bus BUS1 or the first battery pack 1 connected to the first bus BUS1, the bidirectional isolation component senses a short-circuit current and is rapidly disconnected when triggered by the short-circuit current. While the bidirectional isolation component is disconnected when triggered by the short-circuit current, a direction of the short-circuit current (flowing from the fourth bus BUS4 to the third bus BUS3) is fed back to the controller, and the controller controls the first intelligent protection component to be fused according to the direction of the short-circuit current and states of the unidirectional isolation components (the unidirectional isolation components 21a to 21h are all in a connected state), so that an influence of the short-circuit fault is limited within the first bus BUS1 and the first battery pack 1 connected to the first bus BUS1.

Then, the controller sends an instruction to the bidirectional isolation component to switch the bidirectional isolation component to a connected state, thereby connecting the third bus BUS3 and the No. 1 rotor motor and the No. 5 rotor motor connected to the third bus BUS3 back to the power distribution network to achieve power reconstruction.

Therefore, when a short-circuit fault occurs in the first bus BUS1 or the first battery pack 1 connected to the first bus BUS1, the entire power distribution network only loses power supply of the first battery pack 1.

### (2) A short-circuit fault occurs in the second bus BUS2 or the second battery pack

Similarly, when a short-circuit fault occurs in the second bus BUS2 or the second battery pack 2 connected to the second bus BUS2, the bidirectional isolation component senses a short-circuit current and is rapidly disconnected when triggered by the short-circuit current. At this time, a component in which the short-circuit fault occurs in the power distribution system can be isolated, that is, an influence of the short-circuit fault is limited within the second bus BUS2, the second battery pack 2 connected to the second bus BUS2, the fourth bus BUS4, and the No. 3 rotor motor and the No. 7 rotor motor connected to the fourth bus BUS4.

The controller controls the second intelligent protection component to be fused according to a direction of the short-circuit current and states of the unidirectional isolation components (the unidirectional isolation components 21a to 21h are all in a connected state), so that the influence of the short-circuit fault is limited within the second bus BUS2 and the second battery pack 2 connected to the second bus BUS2.

Then, the controller sends an instruction to the bidirectional isolation component, and the bidirectional isolation component is connected, thereby connecting the fourth bus BUS4 and the No. 3 rotor motor and the No. 7 rotor motor connected to the fourth bus BUS4 back to the power distribution network to achieve power reconstruction.

Therefore, when a short-circuit fault occurs in the second bus BUS2 or the second battery pack 2 connected to the second bus BUS2, the entire power distribution network only loses power supply of the second battery pack 2.

### (3) A short-circuit fault occurs in the third bus or the No. 1 rotor motor or the No. 5 rotor motor

When a short-circuit fault occurs in the third bus BUS3 or the No. 1 rotor motor or the No. 5 rotor motor connected to the third bus BUS3, the bidirectional isolation component senses a short-circuit current and is rapidly disconnected when triggered by the short-circuit current. At this time, a component in which the short-circuit fault occurs in the power distribution system can be isolated, that is, an influence of the short-circuit fault is limited within the first bus BUS1, the first battery pack 1 connected to the first bus BUS1, the third bus BUS3, and the No. 1 rotor motor and the No. 5 rotor motor connected to the third bus BUS3.

The controller controls the first intelligent protection component to be fused according to a direction of the short-circuit current and states of the unidirectional isolation components (the unidirectional isolation components 21a to 21h are all in a connected state), so that the influence of the short-circuit fault is limited within the third bus BUS3 and the No. 1 rotor motor and the No. 5 rotor motor connected to the third bus BUS3, and the first bus BUS1 and the first battery pack 1 connected to the first bus BUS1 are restored to supply power to the power distribution network.

Therefore, when a short-circuit fault occurs in the third bus BUS3 or the No. 1 rotor motor or the No. 5 rotor motor connected to the third bus BUS3, the entire power distribution network only loses output of the No. 1 rotor motor and the No. 5 rotor motor. Since the No. 1 rotor and the No. 5 rotor are symmetrically arranged on the aircraft, simultaneous loss of power thereof is acceptable.

### (4) A short-circuit fault occurs in the fourth bus BUS4 or the No. 3 rotor motor or the No. 7 rotor motor

Similarly, when a short-circuit fault occurs in the fourth bus BUS4 or the No. 3 rotor motor or the No. 7 rotor motor connected to the fourth bus BUS4, the bidirectional isolation component senses a short-circuit current and is rapidly disconnected when triggered by the short-circuit current. At this time, a component in which the short-circuit fault occurs in the power distribution system can be isolated, that is, an influence of the short-circuit fault is limited within the second bus BUS2, the second battery pack 2 connected to the second bus BUS2, the fourth bus BUS4, and the No. 3 rotor motor and the No. 7 rotor motor connected to the fourth bus BUS4.

The controller controls the second intelligent protection component to be fused according to a direction of the short-circuit current and states of the unidirectional isolation components (the unidirectional isolation components 21a to 21h are all in a connected state), so that the influence of the short-circuit fault is limited within the fourth bus BUS4 and the No. 3 rotor motor and the No. 7 rotor motor connected to the fourth bus BUS4, and the second bus BUS2 and the second battery pack 2 connected to the second bus BUS2 are restored to supply power to the power distribution network.

Therefore, when a short-circuit fault occurs in the fourth bus BUS4 or the No. 3 rotor motor or the No. 7 rotor motor connected to the fourth bus BUS4, the entire power distribution network only loses output of the No. 3 rotor motor and the No. 7 rotor motor. Since the No. 3 rotor and the No. 7 rotor are symmetrically arranged on the aircraft, simultaneous loss of power thereof is acceptable.

### (5) At least one load among the No. 2 rotor motor, the No. 4 rotor motor, the No. 6 rotor motor, and the No. 8 rotor motor has a short-circuit fault

When any one or more loads among the No. 2 rotor motor, the No. 4 rotor motor, the No. 6 rotor motor, and the No. 8 rotor motor have a short-circuit fault, two unidirectional isolation components connected to a short-circuit load are rapidly disconnected when triggered by a short-circuit current, so as to isolate the short-circuit fault.

Meanwhile, at this time, the bidirectional isolation component may also sense a relatively large short-circuit current, be disconnected when triggered by the short-circuit current, and feed back a direction of the short-circuit current to the controller. Since the unidirectional isolation components connected to the short-circuit load among the unidirectional isolation components are in a disconnected state, the first intelligent protection component and the second intelligent protection component are not fused.

Therefore, when a short-circuit fault occurs in any one load among the No. 2 rotor motor, the No. 4 rotor motor, the No. 6 rotor motor, and the No. 8 rotor motor, the entire power distribution network only loses output of a motor corresponding to the short-circuit fault itself.

It can be understood that, when the aircraft is a twelve-rotor electric aircraft, that is, four arms are further added on a basis of the eight-rotor electric aircraft, each arm is provided with a propeller, and each propeller corresponds to a driving motor. The power distribution system of the twelve-rotor electric aircraft, on a basis of the eight-rotor electric aircraft, further includes a ninth bus BUS9, a tenth bus BUS10, an eleventh bus BUS11, and a twelfth bus BUS12. Each bus is correspondingly connected to the first bus BUS1 and the fourth bus BUS4 via two unidirectional isolation components, and each bus is further correspondingly connected to one rotor motor to receive power input from the first battery pack 1 and/or the second battery pack 2 to supply power to the rotor motor. A working principle of the power distribution system of the twelve-rotor electric aircraft may be implemented with reference to a working principle of the power distribution system of the eight-rotor electric aircraft.

The present application further provides an electric aircraft, the electric aircraft includes a fuselage, a plurality of rotors provided at the fuselage, and rotor motors corresponding to drive the rotors, and the rotor motors are divided into two parts; and the electric aircraft further includes a power distribution system configured to supply power to the rotor motors, the power distribution system is the power distribution system according to the above embodiments.

The present application further provides a power supply control method for an electric aircraft, and the power supply control method includes the following steps:

during power supply, in response to detecting a short-circuit current caused by a line fault in a power distribution system, controlling working states of a first isolation device and a second isolation device to isolate a faulty line from the power distribution system and reconstruct remaining power supply lines.

In this embodiment, based on the power distribution system structure of the above embodiments, when a short-circuit current occurs in the power distribution system, fault isolation and power reconstruction of remaining power supply lines can be achieved by controlling working states of the first isolation device and the second isolation device. The embodiment of the present application can rapidly isolate a short-circuit fault without affecting normal operation of other power supply lines.

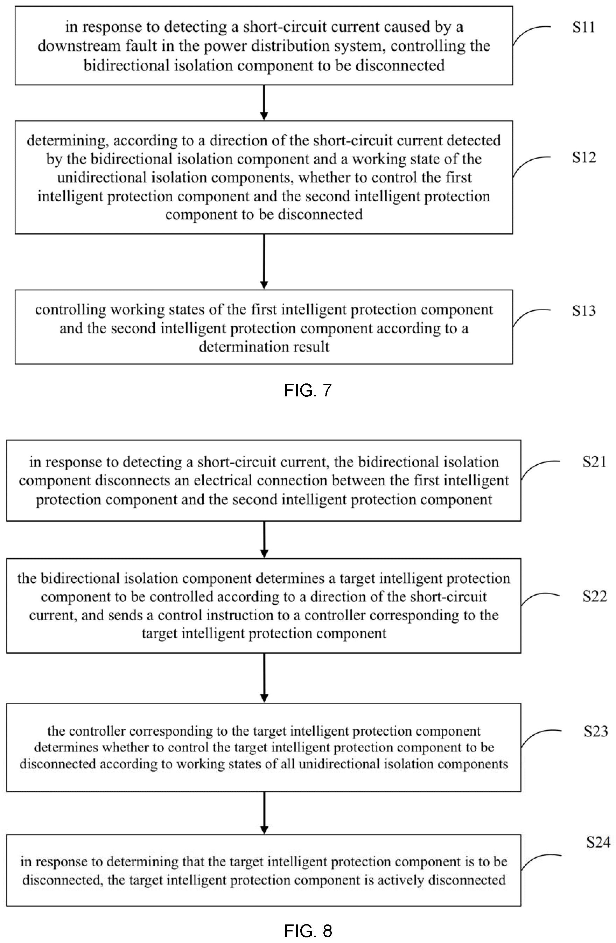

In an embodiment, referring to FIG. 7, when a short-circuit current caused by a line fault in the power distribution system is detected, the controlling working states of the first isolation device and the second isolation device to isolate a faulty line from the power distribution system includes:

S11, in response to detecting a short-circuit current caused by a downstream fault in the power distribution system, controlling the bidirectional isolation component to be disconnected.

S12, determining, according to a direction of the short-circuit current detected by the bidirectional isolation component and a working state of the unidirectional isolation components, whether to control the first intelligent protection component and the second intelligent protection component to be disconnected.

S13, controlling working states of the first intelligent protection component and the second intelligent protection component according to a determination result.

In this embodiment, by providing a control device, working states of the bidirectional isolation component and the unidirectional isolation components are uniformly collected, and based on collected information, a faulty power supply line is determined, and working states of the first intelligent protection component and the second intelligent protection component are controlled, so that the faulty line is accurately isolated without affecting normal operation of other power supply lines.

In another embodiment, referring to FIG. 8, when a short-circuit current caused by a line fault in the power distribution system is detected, the controlling working states of the first isolation device and the second isolation device to isolate a faulty line from the power distribution system includes:

S21, in response to detecting a short-circuit current, the bidirectional isolation component disconnects an electrical connection between the first intelligent protection component and the second intelligent protection component.

S22, the bidirectional isolation component determines a target intelligent protection component to be controlled according to a direction of the short-circuit current, and sends a control instruction to a controller corresponding to the target intelligent protection component.

S23, the controller corresponding to the target intelligent protection component determines whether to control the target intelligent protection component to be disconnected according to working states of all unidirectional isolation components.

S24, in response to determining that the target intelligent protection component is to be disconnected, the target intelligent protection component is actively disconnected.

In this embodiment, by providing corresponding controllers for the intelligent protection components, the controllers can independently control disconnection of the intelligent protection components, thereby avoiding a situation that the intelligent protection components cannot be disconnected due to failure of a controller, which affects safety of the electric aircraft.

In an embodiment, the step S22 includes:
in response to a direction of the short-circuit current being from the first intelligent protection component to the second intelligent protection component, determining the second intelligent protection component as the target intelligent protection component; and in response to the direction of the short-circuit current being from the second intelligent protection component to the first intelligent protection component, determining the first intelligent protection component as the target intelligent protection component.

When a short-circuit occurs, voltages at two ends of the bidirectional isolation component, at an end where the short-circuit fault occurs, are reduced due to the short-circuit and even approach zero. Therefore, an end of the bidirectional isolation component at which the short-circuit fault occurs can be determined according to a direction of a current flowing through the bidirectional isolation component.

In an embodiment, the step S23 includes:
in response to all unidirectional isolation components being in a connected state, determining to control the target intelligent protection component to be disconnected; and in response to at least one unidirectional isolation component being in a disconnected state, determining not to control the target intelligent protection component to be disconnected.

Since a power supply failure at any line position in the power distribution system causes a short-circuit current, when the bidirectional isolation component 10 detects the short-circuit current, it is necessary to determine whether the short-circuit current is caused by a fault in a power supply line of the second part of the rotor motors or a fault in a power supply line of the first part of the rotor motors. Therefore, when controlling whether the intelligent protection component is to be disconnected, determination needs to be made according to connected/disconnected states of the unidirectional isolation components.

In an embodiment, when a short-circuit current caused by a line fault in the power distribution system is detected, the controlling working states of the first isolation device and the second isolation device to reconstruct remaining power supply lines includes: controlling the bidirectional isolation component to be connected. After isolating a faulty power supply line, it is further necessary to control a working state of the first isolation device, that is, controlling the bidirectional isolation component to be connected, so that remaining power supply lines are restored to the power distribution network.

The present application further provides a computer-readable storage medium, the computer-readable storage medium stores a power supply control program, and the power supply control program, when executed by a processor, implements steps of the power supply control method according to any one of the above embodiments.

Sequence numbers of the above embodiments of the present application are only for description and do not represent superiority or inferiority of the embodiments.

It should be noted that, in this specification, the terms "comprise", "include", or any other variations thereof are intended to cover a non-exclusive inclusion, such that a process, system, article, or apparatus comprising a series of elements not only includes those elements, but also includes other elements not explicitly listed, or further includes elements inherent to the process, system, article, or apparatus. Without further limitation, an element defined by the phrase "comprising a ..." does not exclude existence of other identical elements in the process, system, article, or apparatus comprising the element.

Through the description of the above embodiments, those skilled in the art can clearly understand that the system in the above embodiments may be implemented by means of software in combination with a necessary general hardware platform, and certainly may also be implemented by hardware, but in many cases the former is a better implementation. Based on such understanding, the technical solutions of the present application, in essence or the part contributing to the related art, may be embodied in a form of a software product, and the computer software product is stored in a computer-readable storage medium (such as ROM/RAM, magnetic disk, optical disk) as described above, and comprises a plurality of instructions for causing a terminal device (which may be a mobile phone, a computer, a parking management device, an air conditioner, or a network device, etc.) to execute the systems described in the embodiments of the present application.

The embodiments of the present application have been described above. The above description is exemplary rather than exhaustive, and is not limited to the disclosed embodiments. Many modifications and variations will be apparent to those of ordinary skill in the art without departing from the scope and spirit of the described embodiments. The selection of terms used herein is intended to best explain principles of the embodiments, practical applications, or improvements over technologies in the market, or to enable other skilled in the art to understand the embodiments disclosed herein.

## Claims

1. A power distribution system for an electric aircraft, **characterized in that**, the electric aircraft comprises a fuselage, a plurality of rotors provided at the fuselage and rotor motors configured to drive the rotors, and the rotor motors are divided into two parts, wherein the power distribution system comprises: a first battery pack, a second battery pack, a first isolation device, and a second isolation device;
the first battery pack and the second battery pack are electrically connected to a first part of the rotor motors via the first isolation device to supply power to the first part of the rotor motors;
the first battery pack and the second battery pack are electrically connected to a second part of the rotor motors via the second isolation device to supply power to the second part of the rotor motors; and
when a power supply failure occurs in the power distribution system, the first isolation device and the second isolation device isolate a faulty line and reconstruct power supply lines.

2. The power distribution system for the electric aircraft according to claim 1, wherein a first part of the rotor motors comprises two sets of rotor motors, each set of rotor motors comprises two symmetrically provided rotor motors; and the first isolation device comprises: a bidirectional isolation component, a first intelligent protection component, and a second intelligent protection component;
one end of the first intelligent protection component is electrically connected to the first battery pack via a first bus, and another end of the first intelligent protection component is electrically connected to one set of rotor motors in the first part of the rotor motors;
one end of the second intelligent protection component is electrically connected to the second battery pack via a second bus, and another end of the second intelligent protection component is electrically connected to another set of rotor motors in the first part of the rotor motors; and
one end of the bidirectional isolation component is electrically connected to the first intelligent protection component, and another end of the bidirectional isolation component is electrically connected to the second intelligent protection component, and is configured to be disconnected when triggered by a short-circuit current.

3. The power distribution system for the electric aircraft according to claim 1 or 2, wherein the second isolation device comprises sets of unidirectional isolation components corresponding to the second part of the rotor motors, and each set of unidirectional isolation components comprises two unidirectional isolation components; and
one end of one unidirectional isolation component in the set of unidirectional isolation components is electrically connected to the first battery pack via a first bus, and one end of another unidirectional isolation component is electrically connected to the second battery pack via a second bus; and other ends of the two unidirectional isolation components in the set of unidirectional isolation components are electrically connected to a same rotor motor.

4. The power distribution system for the electric aircraft according to claim 3, wherein a second part of the rotor motors comprises two symmetrically provided rotor motors, a first ducted motor, and a second ducted motor; three sets of unidirectional isolation components are provided, and the first ducted motor and the second ducted motor are electrically connected to a same set of the unidirectional isolation components.

5. The power distribution system for the electric aircraft according to claim 3, wherein a second part of the rotor motors comprises at least two sets of rotor motors, each set of rotor motors comprises two symmetrically provided rotor motors; at least four sets of unidirectional isolation components are provided, and the sets of unidirectional isolation components are correspondingly electrically connected to the second part of the rotor motors.

6. The power distribution system for the electric aircraft according to claim 2, wherein the first intelligent protection component is provided with a first controller, and the second intelligent protection component is provided with a second controller; the first controller is configured to control whether the first intelligent protection component is disconnected according to a working state of the bidirectional isolation component and a working state of the second isolation device; and the second controller is configured to control whether the second intelligent protection component is disconnected according to the working state of the bidirectional isolation component and the working state of the second isolation device.

7. The power distribution system for the electric aircraft according to claim 2, wherein the power distribution system further comprises a control device configured to, when a power supply failure occurs in the power distribution system, control working states of the first isolation device and the second isolation device to isolate a faulty line and reconstruct power supply lines.

8. The power distribution system for the electric aircraft according to claim 3, wherein the bidirectional isolation component comprises a bidirectional switching unit; and/or the unidirectional isolation component comprises a unidirectional switching unit; and/or both the first intelligent protection component and the second intelligent protection component comprise a fuse unit.

9. An electric aircraft, **characterized by** comprising a fuselage, a plurality of rotors provided at the fuselage, and rotor motors configured to drive the rotors, wherein the rotor motors are divided into two parts; and the electric aircraft further comprises a power distribution system configured to supply power to the rotor motors, wherein the power distribution system is the power distribution system according to any one of claims 1 to 8.

10. A power supply control method for an electric aircraft, **characterized by** comprising:
during power supply, in response to detecting a short-circuit current caused by a line fault in a power distribution system, controlling working states of a first isolation device and a second isolation device to isolate a faulty line from the power distribution system and reconstruct remaining power supply lines.

11. The power supply control method according to claim 10, wherein the power distribution system is the power distribution system for the electric aircraft according to claim 3; and the controlling working states of the first isolation device and the second isolation device to isolate the faulty line from the power distribution system in response to detecting the short-circuit current caused by the line fault in the power distribution system comprises:
in response to detecting a short-circuit current caused by a downstream fault in the power distribution system, controlling a bidirectional isolation component to be disconnected;
determining, according to a direction of the short-circuit current detected by the bidirectional isolation component and working states of unidirectional isolation components, whether to control a first intelligent protection component and a second intelligent protection component to be disconnected; and
controlling working states of the first intelligent protection component and the second intelligent protection component according to a determination result.

12. The power supply control method according to claim 10, wherein the power distribution system is the power distribution system for the electric aircraft according to claim 3; and the controlling the working states of the first isolation device and the second isolation device to isolate the faulty line from the power distribution system in response to detecting the short-circuit current caused by the line fault in the power distribution system comprises:
in response to detecting, by a bidirectional isolation component, a short-circuit current, disconnecting an electrical connection between a first intelligent protection component and a second intelligent protection component;
determining, by the bidirectional isolation component, a target intelligent protection component to be controlled according to a direction of the short-circuit current, and sending a control command to a controller corresponding to the target intelligent protection component;
determining, by the controller corresponding to the target intelligent protection component, whether to control the target intelligent protection component to be disconnected according to working states of all unidirectional isolation components; and
controlling, according to a determination result, the target intelligent protection component to be disconnected.

13. The power supply control method according to claim 12, wherein the determining, by the bidirectional isolation component, the target intelligent protection component to be controlled according to the direction of the short-circuit current comprises:
in response to the direction of the short-circuit current being from the first intelligent protection component to the second intelligent protection component, determining the second intelligent protection component as the target intelligent protection component; and
in response to the direction of the short-circuit current being from the second intelligent protection component to the first intelligent protection component, determining the first intelligent protection component as the target intelligent protection component.

14. The power supply control method according to claim 12, wherein the determining, by the controller corresponding to the target intelligent protection component, whether to control the target intelligent protection component to be disconnected according to the working states of all unidirectional isolation components comprises:
in response to all unidirectional isolation components being in a connected state, determining to control the target intelligent protection component to be disconnected; and
in response to at least one unidirectional isolation component being in a disconnected state, determining not to control the target intelligent protection component to be disconnected.

15. The power supply control method according to claim 11 or 12, wherein the controlling the working states of the first isolation device and the second isolation device to reconstruct the remaining power supply lines comprises:
controlling the bidirectional isolation component to be connected.

16. A computer-readable storage medium, **characterized in that** the computer-readable storage medium stores a power supply control program that, when executed by a processor, implements the power supply control method according to any one of claims 10 to 15.
